# EUROPÄISCHE PATENTSCHRIFT

(11) **EP 1 047 920 B1**
(45) Veröffentlichungstag und Bekanntmachung des Hinweises auf die Patenterteilung: **15.07.2009**
(21) Anmeldenummer: 98955470.4
(22) Anmeldetag: 16.10.1998
(51) Int. Cl.: G01F 23/36, G01F 23/32

(54) **FÜLLSTANDSSENSOR**
LEVEL SENSOR
DETECTEUR DE NIVEAU DE REMPLISSAGE

(30) Priorität: 20.10.1997 DE 19746276
(43) Veröffentlichungstag der Anmeldung: 02.11.2000
(73) Patentinhaber: Continental Automotive GmbH, 30165 Hannover (DE)
(72) Erfinder: GÜNTHER, Klaus-Peter, D-65326 Aarbergen (DE)
(86) Internationale Anmeldenummer: PCT/EP1998/006580
(87) Internationale Veröffentlichungsnummer: WO 1999/020986

(56) Entgegenhaltungen:
- FR-A- 2 656 419
- FR-A- 2 661 497
- US-A- 1 885 051
- US-A- 3 925 747

## Beschreibung

Die Erfindung betrifft einen Füllstandssensor zur Erzeugung von elektrischen Signalen in Abhängigkeit von eine Füllstand einer Flüssigkeit in einem Behälter, wobei der Füllstandssensor ein Trägerteil sowie mit einem an dem Trägerteil schwenkbar und axial unverschieblich gelagerten, einen Regler in Abhängigkeit von seinem Stellwinkel betätigenden Bügel umfasst, wobei der Bügel zumindest zwei radial abstehende Stege und das Trägerteil die Stege übergreifende, entsprechend den Abmessungen der Stege voneinander beabstandete Flanschstücke aufweist, mit einem an dem Bügel befestigten, einen Schwimmer tragenden Hebeldraht und mit einer von der Schwenkachse des Bügels entfernt angeordneten axialen Führung.

Solche Füllstandssensoren werden in heutigen Kraftfahrzeugen beispielsweise zur Ermittlung eines Füllstandes an Kraftstoff in einem Kraftstoffbehälter eingesetzt und sind aus der Praxis bekannt. Hierbei hat der Bügel als axiale Führung einen Haken zum Hintergreifen eines von der Lagerung entfernt angeordneten Kragens des Trägerteils. Von dem Schwimmer auf den Hebeldraht und damit auf den Bügel übertragende Kräfte werden hierdurch im Bereich der Schwenkachse und der axialen Führung abgestützt. Der Regler ist als Potentiometer mit einer auf dem Trägerteil angeordneten Schleifbahn und einem an dem Bügel befestigten, gegen die Schleifbahn vorgespannten Schleifkontakt ausgebildet. Durch die axiale Führung des Bügels wird ein konstanter Abstand des Bügels von dem Trägerteil und damit eine vorgesehene Vorspannung des Schleifkontaktes gegen die Schleifbahn sichergestellt.

Nachteilig bei dem bekannten Füllstandssensor ist, dass der Bügel durch den Haken für die axiale Führung als spritztechnisch schwierig zu fertigendes Bauteil gestaltet ist. Weiterhin werden bei dem bekannten Füllstandssensor Verbindungsstellen des Hebeldrahtes an dem Bügel durch auf den Schwimmer wirkende Kräfte sehr hoch belastet. Dies erfordert eine konstruktiv aufwendige und kostenintensive Befestigung des Hebeldrahtes an dem Bügel.

Ein Füllstandsensor mit einem an einem Bügel befestigten Hebeldraht, wobei der Bügel einen radial abstehenden Haken aufweist, der zum Hintergreifen eines von der Lagerung entfernt angeordneten Kragens am Trägerteil ausgebildet ist, ist der FR 2 661 497 bekannt. Ein Füllstandsgeber mit zwei am Trägerteil angeordneten Haken, welche einen Bund des Hebeldraht tragendes Bügel hintergreifen, ist aus der FR 2 656 419 bekannt. Beide Füllstandsgeber besitzen den Nachteil, dass auf Grund der einen Führung des Bügels die auf den Hebeldraht und damit auf den Bügel einwirkenden Kräfte zu groß sind.

Der Erfindung liegt das Problem zugrunde, einen Füllstandssensor der eingangs genannten Art so zu gestalten, dass er möglichst einfach aufgebaut und kostengünstig zu fertigen ist.

Dieses Problem wird erfindungsgemäß dadurch gelöst, dass die Führung eine auf dem Trägerteil angeordnete, den Hebeldraht übergreifende Schürze hat, die ein Verschwenken des Hebeldrahts in Richtung der Schwenkachse verhindert.

Durch diese Gestaltung werden von dem Schwimmer auf den Hebeldraht übertragene Kräfte im Bereich des Hebeldrahtes von der Schürze abgestützt, so dass die Verbindung des Hebeldrahtes an dem Bügel besonders gering belastet wird. Der Bügel benötigt keinen Haken für die axiale Führung und ist daher besonders einfach aufgebaut. Da alle Elemente der axialen Führung an dem Trägerteil angeordnet sind, lässt sich der Bügel spritztechnisch sehr einfach fertigen. Hierdurch gestaltet sich der erfindungsgemäße Füllstandssensor besonders kostengünstig.

Die Schürze ist gemäß einer vorteilhaften Weiterbildung der Erfindung besonders einfach aufgebaut und hat sehr kleine Abmessungen, wenn sie balkenförmig gestaltet ist. Hierdurch lässt sich der erfindungsgemäße Füllstandssensor einfach durch eine sehr klein gestaltete Öffnung in den Behälter einführen. Weiterhin wird der Hebeldraht durch diese Gestaltung besonders zuverlässig geführt, so dass jederzeit die vorgesehene Vorspannung des Schleifkontaktes gegen die Schleifbahn gewährleistet ist. Dank der Erfindung lässt sich zudem als Regler auch ein magnetisch aktiver Positionssensor einsetzen, bei dem ein auf dem Bügel angeordneter Magnet mit konstantem Abstand über ein auf dem Trägerteil befestigtes Widerstandsnetzwerk geführt wird.

Das Verschwenken des Bügels wird gemäß einer anderen vorteilhaften Weiterbildung der Erfindung nur unwesentlich durch Reibungsverluste oder durch eine Adhäsion der Schürze an dem Hebeldraht gedämpft, wenn die dem Hebeldraht zugewandten Bereiche der Schürze und des Trägerteils jeweils eine schmale Gleitbahn zur Führung des Hebeldrahtes aufweisen.

Der Hebeldraht läßt sich gemäß einer anderen vorteilhaften Weiterbildung der Erfindung besonders einfach zwischen die Gleitbahnen einführen, wenn die Gleitbahnen in Richtung des Hebeldrahtes voneinander beabstandet sind.

Zur weiteren Vereinfachung der Montage des Hebeldrahtes trägt es gemäß einer anderen vorteilhaften Weiterbildung der Erfindung bei, wenn eine Gleitbahn des Trägerteils auf einem in Richtung Schwenkachse des Bügels geneigten Steg angeordnet ist.

Der Schwenkbereich des Hebeldrahtes läßt sich gemäß einer anderen vorteilhaften Weiterbildung der Erfindung mit besonders geringem baulichen Aufwand begrenzen, wenn die Schürze mittels Armen mit dem Trägerteil verbunden ist und wenn die Arme zur Begrenzung des Schwenkbereichs des Hebeldrahtes ausgebildet sind.

Der erfindungsgemäße Füllstandssensor besteht aus besonders wenigen zu montierenden Bauteilen, wenn die Schürze einteilig mit dem Trägerteil gefertigt ist. Hierdurch kann beispielsweise zunächst der Bügel an dem Trägerteil montiert werden. Anschließend läßt sich der Hebeldraht zwischen den beiden Gleitbahnen des Trägerteils und der Schürze hindurchschieben.

Zur weiteren Vereinfachung der Montage des erfindungsgemäßen Füllstandssensors trägt es bei, wenn die Schürze mittels einer Rastverbindung an dem Trägerteil befestigt ist.

Die Schürze läßt sich gemäß einer anderen vorteilhaften Weiterbildung der Erfindung besonders nahe an dem Ende des Bügels anordnen, wenn die Schürze entsprechend dem Schwenkbereich des Bügels bogenförmig gestaltet ist.

Die Lagerung des Bügels an dem Trägerteil benötigt gemäß einer anderen vorteilhaften Weiterbildung der Erfindung zur Aufnahme von hohen Axialkräften nur sehr kleine Abmessungen, wenn der Bügel zumindest zwei radial abstehende Stege und das Trägerteil die Stege übergreifende, entsprechend den Abmessungen der Stege voneinander beabstandete Flanschstücke aufweist. Zur Montage lassen sich die Stege des Bügels einfach zwischen die Flanschstücke einsetzen und anschließend unter die Flanschstücke einschwenken.

Die Lagerung des Bügels hat gemäß einer anderen vorteilhaften Weiterbildung der Erfindung eine besonders geringe Reibung, wenn die Stege an den Flanschstücken und/oder dem Trägerteil anliegende Gleitelemente haben.

Die Lagerung des Bügels an dem Trägerteil gestaltet sich gemäß einer anderen vorteilhaften Weiterbildung der Erfindung konstruktiv besonders einfach, wenn der Bügel eine Bohrung und das Trägerteil einen in die Bohrung eindringenden Zapfen aufweist.

Der Hebeldraht könnte wie bei dem bekannten Füllstandssensor auf der Oberseite des Bügels befestigt werden. Hierdurch hat der Füllstandssensor jedoch sehr große Abmessungen. Zur Verringerung der Abmessungen des erfindungsgemäßen Füllstandssensors trägt es bei, wenn ein Rastelement des Bügels zur Halterung des Hebeldrahtes in einem seitlichen Bereich angeordnet ist. Hierdurch befindet sich der Hebeldraht platzsparend in derselben Ebene wie der Bügel.

Der Hebeldraht könnte beispielsweise ausschließlich an dem Bügel befestigt sein. Zur Aufnahme von auf den Hebeldraht wirkenden Zug- oder Druckkräften muß die Befestigung des Hebeldrahtes an dem Bügel jedoch besonders stabil ausgebildet sein. Zug- und Druckkräfte des Hebeldrahtes werden gemäß einer anderen vorteilhaften Weiterbildung der Erfindung nicht auf den Bügel übertragen, wenn der Zapfen des Trägerteils eine Bohrung zur Aufnahme einer Abwinklung des Hebeldrahtes aufweist. Hierdurch kann der Bügel besonders leicht und kompakt gestaltet werden.

Der Bügel läßt sich gemäß einer anderen vorteilhaften Weiterbildung der Erfindung bei in die Bohrung des Zapfens eingesetztem Hebeldraht montieren und demontieren, wenn der Bügel eine sich von der Abwinklung des Hebeldrahtes bis über einen der Stege erstreckende Ausnehmung hat.

Auf den Hebeldraht wirkende Kräfte könnten zu einem Kippen des Bügels zwischen der Lagerung und der Schürze führen. Das Kippen führt jedoch gemäß einer anderen vorteilhaften Weiterbildung der Erfindung nicht zu fehlerhaften Signalen des Reglers, wenn der Regler in der Mitte zwischen der Schürze und der Schwenkachse des Bügels anbeordnet ist.

Geräusche des erfindungsgemäßen Füllstandssensors lassen sich einfach vermeiden, wenn der Bügel oder das Trägerteil aus dem Kunststoff PK und das jeweils andere Bauteil aus POM gefertigt sind. Der Kunststoff PK ist unter dem Handelsnamen Carilon bekannt und führt bei einem Gleiten über den aus POM gefertigten Trägerteil nicht zu unerwünschten Geräuschen. Bei dem Gleiten des aus Metall gefertigten Hebeldrahtes an dem Kunststoff des Trägerteils entstehen ebenfalls keine Geräusche.

Die Erfindung läßt zahlreiche Ausführungsformen zu. Zur weiteren Verdeutlichung ihres Grundprinzips sind drei davon in der Zeichnung dargestellt und werden nachfolgend beschrieben. Diese zeigt in
- Figur 1: eine schematische Darstellung eines erfindungsgemäßen Füllstandssensors,
- Figur 2: einen Längsschnitt durch den Füllstandssensor aus Figur 1 entlang der Linie II - II,
- Figur 3: eine stark vergrößerte Einzelheit "X" aus Figur 2,
- Figur 4: eine weitere Ausführungsform des erfindungsgemäßen Füllstandssensors,
- Figur 5: eine weitere Ausführungsform des erfindungsgemäßen Füllstandssensors in einem Längsschnitt.

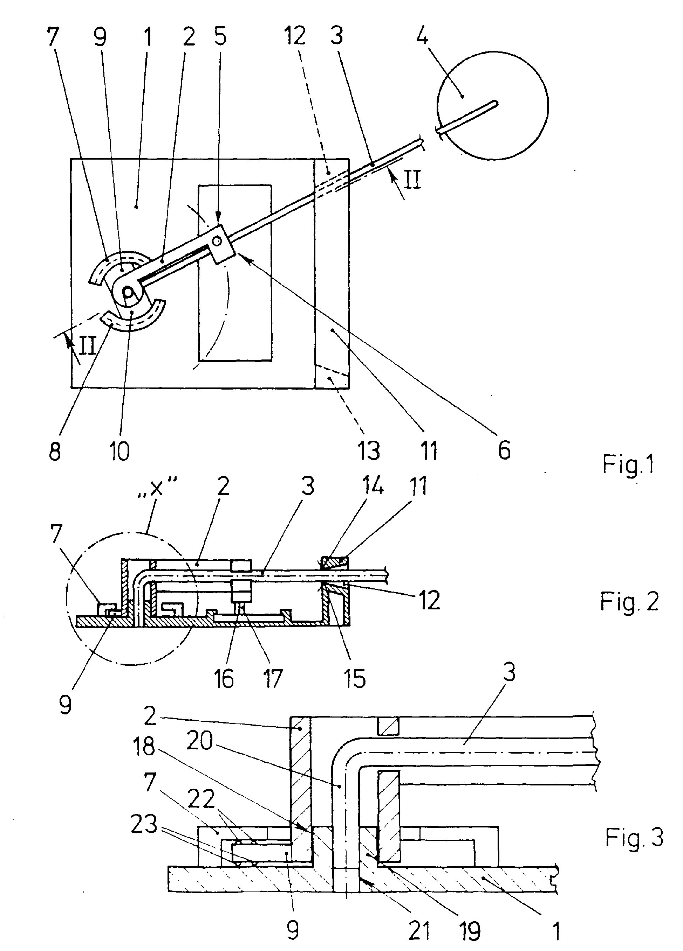

Die Figur 1 zeigt einen erfindungsgemäßen Füllstandssensor in einer schematischen Darstellung. Der Füllstandssensor hat ein Trägerteil 1, auf dem ein Bügel 2 schwenkbar und axial unverschieblich gelagert ist. An dem Bügel 2 ist ein Hebeldraht 3 mit einem Schwimmer 4 befestigt. Der Füllstandssensor kann beispielsweise an einer nicht dargestellten vertikalen Wandung eines Kraftstoffbehälters eines Kraftfahrzeuges montiert werden. Die Position des dem Kraftstoffspiegel folgenden Schwimmers 4 wird von einem Regler 5 erfaßt, der elektrische Signale in Abhängigkeit von dem Stellwinkel des Bügels 2 erzeugt. Der Bügel 2 weist in einem seitlichen Bereich ein Rastelement 6 zur Halterung des Hebeldrahtes 3 auf.

Das Trägerteil 1 hat zwei Flanschstücke 7, 8, die zwei radial abstehende Stege 9, 10 des Bügels 2 übergreifen. Die Flanschstücke 7, 8 weisen voneinander einen der Breite der Stege 9, 10 entsprechenden Abstand auf, so daß sich die Stege 9, 10 zur Montage zwischen die Flanschstücke 7, 8 einsetzen und anschließend unter die Flanschstücke 7, 8 einschwenken lassen. Die Stege 9, 10 und die Flanschstücke 7, 8 bilden damit eine axiale Lagerung des Bügels 2. Das Trägerteil 1 hat eine den Hebeldraht 3 übergreifende Schürze 11, die ein Verschwenken des Hebeldrahtes 3 senkrecht zur Zeichenebene verhindert. Die Schürze 11 wird seitlich von jeweils einem Arm 12, 13 gehalten. Die Arme 12, 13 bilden Anschläge zur Begrenzung des Schwenkbereichs des Hebeldrahtes 3.

Die Figur 2 zeigt den Füllstandssensor aus Figur 1 in einer Schnittdarstellung entlang der Linie II - II. Hierbei ist zu erkennen, daß die Schürze 11 und das Trägerteil 1 jeweils eine schmale Gleitbahn 14, 15 für den Hebeldraht 3 aufweisen. Hierdurch ist der Hebeldraht 3 besonders reibungsarm geführt. Der Regler 5 ist als magnetisch aktiver Positionssensor ausgebildet und hat ein auf dem Trägerteil 1 eingeklipstes Widerstandsnetzwerk 16 und einen an dem Bügel 2 befestigten Magneten 17.

In Figur 3 ist die Lagerung des Bügels 2 auf dem Trägerteil 1 stark vergrößer dargestellt. Das Trägerteil 1 hat einen in eine Bohrung 18 des Bü-gels 2 eindringenden Zapfen 19 als radiale Lagerung. Der Hebeldraht 3 weist eine Abwinklung 20 auf, welche in eine zentrale Bohrung 21 des Zapfens 19 eindringt. Da der Magnet 17 des Reglers 5 an dem Bügel 2 befestigt ist, kann die Abwinklung 20 des Hebeldrahtes 3 in der Bohrung 21 ein großes Spiel haben, ohne daß eine fehlerhafte Messung des Füllstandssensors zu befürchten ist. Die Stege 9, 10 des Bügels 2 haben noppenartige Gleitelemente 22, 23, die an dem Trägerteil 1 und den Flanschstücken 7, 8 anliegen.

Zur Montage des Füllstandssensors wird zunächst der Bügel 2 auf den Zapfen 19 des Trägerteils 1 gesteckt. Die Stege 9, 10 gelangen hierbei zwischen die Flanschstücke 7, 8. Anschließend wird der Hebeldraht 3 zwischen die Gleitbahnen 14, 15 der Schürze 11 und des Trägerteils 1 hindurchgeführt und mit seiner Abwinklung 20 in die Bohrung 21 des Zapfens 19 eingesetzt. Der Bügel 2 läßt sich nun verschwenken, bis die Stege 9, 10 unter die Flanschstücke 7, 8 gelangen. Nach einem Verklipsen des Hebeldrahtes 3 in dem Rastelement 6 des Bügels 2 ist der Füllstandssensor montiert.

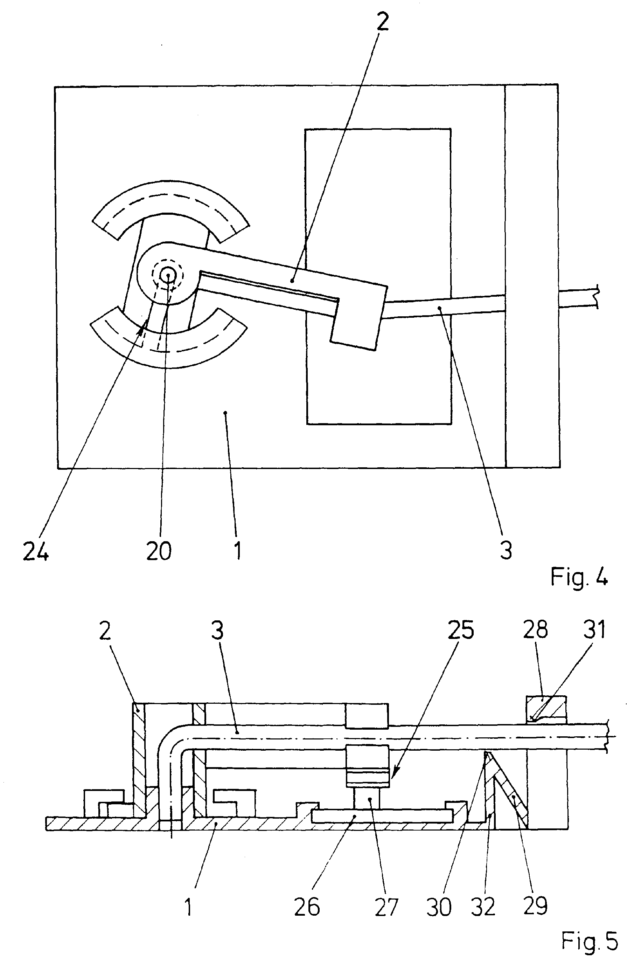

Die Figur 4 zeigt eine weitere Ausführungsform des erfindungsgemäßen Füllstandssensors. Der Bügel 2 weist im Bereich seiner Drehachse eine radial über einen der Stege 9 nach außen geführte Ausnehmung 24 auf. Die Ausnehmung 24 hat eine dem Hebeldraht 3 entsprechende Breite. Hierdurch läßt sich der Bügel 2 bei eingesetztem Hebeldraht 3 montieren und demontieren. Der Hebeldraht 3 ist im Bereich des Rastelementes 6 des Bügels 2 geringfügig gebogen. An dieser Stelle läßt sich der Regler 5 auf die Position des in Figur 1 dargestellten Schwimmers 4 durch ein Verbiegen des Hebeldrahtes 3 justieren.

Die Figur 5 zeigt eine weitere Ausführungsform des erfindungsgemäßen Füllstandssensors in einem Längsschnitt. Der Füllstandssensor hat einen als Potentiometer ausgebildeten Regler 25 mit einer auf dem Trägerteil 1 befestigten Dickschichtschleifbahn 26, gegen die ein auf dem Bügel 2 befestigter Schleifkontakt 27 vorgespannt ist. Selbstverständlich kann der Regler 25 auch wie bei der Ausführungsform nach Figur 1 als magnetisch aktiver Positionssensor ausgebildet sein. Der Hebeldraht 3 wird von auf einer balkenförmigen Schürze 28 und auf einem schrägen Steg 29 angeordneten Gleitbahnen 30, 31 axial geführt. Der Steg 29 ist in Richtung des Hebeldrahtes 3 von der Schürze 28 beabstandet. Diese Gestaltung ermöglicht ein besonders einfaches Einführen des Hebeldrahtes 3 unter die Schürze 28. Der Steg 29 stützt sich über eine senkrechte Wand 32 an dem Trägerteil 1 ab.

## Patentansprüche

1. Füllstandssensor zur Erzeugung von elektrischen Signalen in Abhängigkeit von einem Füllstand einer Flüssigkeit in einem Behälter wobei der Füllstandssensor ein Trägerteil (1) sowie mit einem an dem Trägerteil schwenkbar und axial unverschieblich gelagerten einen Regler in Abhängigkeit von seinem Stellwinkel betätigenden Bügel umfasst, wobei der Bügel (2) zumindest zwei radial abstehende Stege (9, 10) und das Trägerteil die Stege übergreifende, entsprechend den Abmessungen der Stege voneinander beabstandete Flanschstücke (7, 8) aufweist, mit einem an dem Bügel befestigten, einen Schwimmer tragenden Hebeldraht (3) und mit einer von der Schwenkachse des Bügels entfernt angeordneten axialen Führung, **dadurch gekennzeichnet, dass** die Führung eine auf dem Trägerteil (1) angeordnete, den Hebeldraht (3) übergreifende Schürze (11, 28) hat, die ein Verschwenken des Hebeldrahts in Richtung der Schwenkachse verhindert.

2. Füllstandssensor nach Anspruch 1, **dadurch gekennzeichnet, daß** die Schürze (11, 28) balkenförmig gestaltet ist.

3. Füllstandssensor nach Anspruch 1 oder 2, **dadurch gekennzeichnet, daß** die dem Hebeldraht (3) zugewandten Bereiche der Schürze (11, 28) und des Trägerteils (1) jeweils eine schmale Gleitbahn (14, 15, 30, 31) zur Führung des Hebeldrahtes (3) aufweisen.

4. Füllstandssensor nach zumindest einem der vorhergehenden Ansprüche, **dadurch gekennzeichnet, daß** die Gleitbahnen (30, 31) in Richtung des Hebeldrahtes (3) voneinander beabstandet sind.

5. Füllstandssensor nach zumindest einem der vorhergehenden Ansprüche, **dadurch gekennzeichnet, daß** eine Gleitbahn (30) des Trägerteils (1) auf einem in Richtung Schwenkachse des Bügels (2) geneigten Steg (29) angeordnet ist.

6. Füllstandssensor nach zumindest einem der vorhergehenden Ansprüche, **dadurch gekennzeichnet, daß** die Schürze (11) mittels Armen (12, 13) mit dem Trägerteil (1) verbunden ist und daß die Arme (12, 13) zur Begrenzung des Schwenkbereichs des Hebeldrahtes (3) ausgebildet sind.

7. Füllstandssensor nach zumindest einem der vorhergehenden Ansprüche, **dadurch gekennzeichnet, daß** die Schürze (11, 28) einteilig mit dem Trägerteil (1) gefertigt ist.

8. Füllstandssensor nach zumindest einem der vorhergehenden Ansprüche, **dadurch gekennzeichnet, daß** die Schürze (11, 28) mittels einer Rastverbindung an dem Trägerteil (1) befestigt ist.

9. Füllstandssensor nach zumindest einem der vorhergehenden Ansprüche, **dadurch gekennzeichnet, daß** die Schürze (28) entsprechend dem Schwenkbereich des Bügels (2) bogenförmig gestaltet ist.

10. Füllstandssensor nach zumindest einem der vorhergehenden Ansprüche, **dadurch gekennzeichnet, daß** die Stege (9, 10) an den Flanschstücken (7, 8) und/oder dem Trägerteil (1) anliegende Gleitelemente (22, 23) haben.

11. Füllstandssensor nach zumindest einem der vorhergehenden Ansprüche, **dadurch gekennzeichnet, daß** der Bügel (2) eine Bohrung (18) und das Trägerteil (1) einen in die Bohrung (18) eindringenden Zapfen (19) aufweist.

12. Füllstandssensor nach zumindest einem der vorhergehenden Ansprüche, **dadurch gekennzeichnet, daß** ein Rastelement (6) des Bügels (2) zur Halterung des Hebeldrahtes (3) in einem seitlichen Bereich angeordnet ist.

13. Füllstandssensor nach zumindest einem der vorhergehenden Ansprüche, **dadurch gekennzeichnet, daß** der Zapfen (19) des Trägerteils (1) eine Bohrung (21) zur Aufnahme einer Abwinklung (20) des Hebeldrahtes (3) aufweist.

14. Füllstandssensor nach zumindest einem der vorhergehenden Ansprüche, **dadurch gekennzeichnet, daß** der Bügel (2) eine sich von der Abwinklung (20) des Hebeldrahtes (3) bis über einen der Stege (9, 10) erstreckende Ausnehmung (24) hat.

15. Füllstandssensor nach zumindest einem der vorhergehenden Ansprüche, **dadurch gekennzeichnet, daß** ein Schleifkontakt (27) oder ein Magnet (17) des Reglers (5, 25) in der Mitte zwischen der Schürze (11, 28) und der Schwenkachse des Bügels (2) angeordnet ist.

16. Füllstandssensor nach zumindest einem der vorhergehenden Ansprüche, **dadurch gekennzeichnet, daß** der Bügel (2) oder das Trägerteil (1) aus dem Kunststoff PK und das jeweils andere Bauteil aus POM gefertigt ist.

## Claims

1. Filling level sensor for generating electrical signals as a function of a filling level of a fluid in a container, the filling level sensor comprising a carrier part (1) as well as having a bracket which is mounted on the carrier part in a pivotable and axially nondisplaceable fashion and which activates a regulator as a function of its adjustment angle, the bracket (2) having at least two radially protruding webs (9, 10) and the carrier part having flange elements (7, 8) which engage over the webs and are spaced apart from one another in accordance with the dimensions of the webs, the sensor having a lever wire (3) attached to the bracket and fitted with a float, and having an axial guide arranged at a distance from the pivot axis of the bracket, **characterized in that** the guide has an apron (11, 28) which is arranged on the carrier part (1) and engages over the lever wire (3) the apron (11, 28) preventing pivoting of the lever wire in the direction of the pivot axis.

2. Filling level sensor according to Claim 1, **characterized in that** the apron (11, 28) is of bar-shaped design.

3. Filling level sensor according to Claim 1 or 2, **characterized in that** the regions of the apron (11, 28) and of the carrier part (1) which are facing the lever wire (3) each have a narrow guideway (14, 15, 30, 31) for guiding the lever wire (3).

4. Filling level sensor according to at least one of the preceding claims, **characterized in that** the guideways (30, 31) are spaced apart in the direction of the lever wire (3).

5. Filling level sensor according to at least one of the preceding claims, **characterized in that** a guideway (30) of the carrier part (1) is arranged on a web (29) which is inclined in the direction of the pivot axis of the bracket (2).

6. Filling level sensor according to at least one of the preceding claims, **characterized in that** the apron (11) is connected to the carrier part (1) by means of arms (12, 13), and **characterized in that** the arms (12, 13) are designed so as to delimit the pivoting range of the lever wire (3).

7. Filling level sensor according to at least one of the preceding claims, **characterized in that** the apron (11, 28) is produced in one piece with the carrier part (1).

8. Filling level sensor according to at least one of the preceding claims, **characterized in that** the apron (11, 28) is attached to the carrier part (1) by means of a latching connection.

9. Filling level sensor according to at least one of the preceding claims, **characterized in that** the apron (28) is of bow-shaped design corresponding to the pivoting range of the bracket (2).

10. Filling level sensor according to at least one of the preceding claims, **characterized in that** the webs (9, 10) have sliding elements (22, 23) which bear on the flange elements (7, 8) and/or the carrier part (1).

11. Filling level sensor according to at least one of the preceding claims, **characterized in that** the bracket (2) has a drilled hole (18) and the carrier part (1) has a spigget (19) which penetrates the drilled hole (18).

12. Filling level sensor according to at least one of the preceding claims, **characterized in that** a latching element (6) of the bracket (2) for holding the lever wire (3) is arranged in a lateral region.

13. Filling level sensor according to at least one of the preceding claims, **characterized in that** the spigget (19) of the carrier part (1) has a drilled hole (21) for receiving an angled portion (20) of the lever wire (3).

14. Filling level sensor according to at least one of the preceding claims, **characterized in that** the bracket (2) has a recess (24) which extends from the angled portion (20) of the lever wire (3) to above one of the webs (9, 10).

15. Filling level sensor according to at least one of the preceding claims, **characterized in that** a sliding contact (27) or a magnet (17) of the regulator (5, 25) is arranged in the center between the apron (11, 28) and the pivot axis of the bracket (2).

16. Filling level sensor according to at least one of the preceding claims, **characterized in that** the bracket (2) or the carrier part (1) is produced from the plastic PK, and the respective other component is produced from POM.

## Revendications

1. Détecteur de niveau de remplissage destiné à produire des signaux électriques en fonction du niveau de remplissage d'un liquide dans un réservoir, où le détecteur de niveau de remplissage comprend une pièce porteuse (1) ainsi qu'un arceau, qui est monté en pivotement sur la pièce porteuse, mais tout en ne pouvant pas se déplacer dans le sens axial, et qui actionne un régulateur en fonction de son angle de réglage, où l'arceau (2) comporte au moins deux branches (9, 10) faisant saillie dans le sens radial et où la pièce porteuse comporte des brides (7, 8), qui chevauchent les branches et qui sont à une distance l'une de l'autre dépendant des dimensions des branches, avec un fil métallique (3) formant bras de levier fixé à l'arceau et portant un flotteur et avec un système de guidage dans le sens axial placé à une certaine distance de l'axe de pivotement de l'arceau, **caractérisé par le fait que** le système de guidage a un tablier (11, 28) monté sur la pièce porteuse (1) et entourant le fil métallique (3) formant bras de levier, ledit tablier empêchant le fil métallique formant bras de levier de basculer dans la direction de l'axe de pivotement.

2. Détecteur de niveau de remplissage selon la revendication 1, **caractérisé par le fait que** le tablier (11, 28) a la forme d'une barre.

3. Détecteur de niveau de remplissage selon la revendication 1 ou 2, **caractérisé par le fait que** les parties du tablier (11, 28) et de la pièce porteuse (1) tournées vers le fil métallique (3) formant bras de levier ont chacune une étroite piste de glissement (14, 15, 30, 31) destinée à guider le fil métallique (3) formant bras de levier.

4. Détecteur de niveau de remplissage selon au moins l'une des revendications précédentes, **caractérisé par le fait que** les pistes de glissement (30, 31) sont à une certaine distance l'une de l'autre dans la direction du fil métallique (3) formant bras de levier.

5. Détecteur de niveau de remplissage selon au moins l'une des revendications précédentes, **caractérisé par le fait qu'**une piste de glissement (30) de la pièce porteuse (1) est placée sur une barrette (29) inclinée dans la direction de l'axe de pivotement de l'arceau (2).

6. Détecteur de niveau de remplissage selon au moins l'une des revendications précédentes, **caractérisé par le fait que** le tablier (11) est lié à la pièce porteuse (1) au moyen de bras (12, 13) et que les bras (12, 13) sont ménagés pour limiter la plage de pivotement du fil métallique (3) formant bras de levier.

7. Détecteur de niveau de remplissage selon au moins l'une des revendications précédentes, **caractérisé par le fait que** le tablier (11, 28) est fabriqué en une seule pièce avec la pièce porteuse (1).

8. Détecteur de niveau de remplissage selon au moins l'une des revendications précédentes, **caractérisé par le fait que** le tablier (11, 28) est fixé à la pièce porteuse (1) au moyen d'une liaison encliquetée.

9. Détecteur de niveau de remplissage selon au moins l'une des revendications précédentes, **caractérisé par le fait que** le tablier (28) est en forme d'arc correspondant à la plage de pivotement de l'arceau (2).

10. Détecteur de niveau de remplissage selon au moins l'une des revendications précédentes, **caractérisé par le fait que** les branches (9, 10) ont des éléments qui glissent appliqués sur les brides (7, 8) et/ou sur la pièce porteuse (1).

11. Détecteur de niveau de remplissage selon au moins l'une des revendications précédentes, **caractérisé par le fait que** l'arceau (2) comporte un alésage (18) et la pièce porteuse (1), un pivot (19) qui s'engage dans l'alésage (18).

12. Détecteur de niveau de remplissage selon au moins l'une des revendications précédentes, **caractérisé par le fait qu'**un élément d'arrêt (6) de l'arceau (2) est placé dans une zone latérale pour maintenir le fil métallique (3) formant bras de levier.

13. Détecteur de niveau de remplissage selon au moins l'une des revendications précédentes, **caractérisé par le fait que** le pivot (19) de la pièce porteuse (1) comporte un alésage (21) destiné à recevoir un coude (20) du fil métallique (3) formant bras de levier.

14. Détecteur de niveau de remplissage selon au moins l'une des revendications précédentes, **caractérisé par le fait que** l'arceau (2) a un évidement (24) qui s'étend du coude (20) du fil métallique (3) formant bras de levier jusqu'au-delà de l'une des branches (9, 10).

15. Détecteur de niveau de remplissage selon au moins l'une des revendications précédentes, **caractérisé par le fait qu'**un contact à frottement (27) ou un aimant (17) du régulateur (5, 25) est placé au milieu entre le tablier (11, 28) et l'axe de pivotement de l'arceau (2).

16. Détecteur de niveau de remplissage selon au moins l'une des revendications précédentes, **caractérisé par le fait que** soit l'arceau (2), soit la pièce porteuse (1) sont fabriqués en matière plastique PK et l'autre composant en POM (polyoxyméthylène).
